# FASCICULE DE BREVET EUROPEEN

(11) **EP 2 782 795 B1**
(45) Date de publication et mention de la délivrance du brevet: **13.04.2016**
(21) Numéro de dépôt: 12791156.8
(22) Date de dépôt: 21.11.2012
(51) Int. Cl.: B60R 21/217, B60R 21/207

(54) **DISPOSITIF DE COUSSIN GONFLABLE DE SECURITE A DEFLECTEUR ET BRIDE DE MAINTIEN DE SAC**
AIRBAGVORRICHTUNG MIT EINEM DEFLEKTOR UND EINEM BEUTELSTÜTZENDEN FLANSCH
AIRBAG DEVICE HAVING A DEFLECTOR AND A BAG-SUPPORTING FLANGE

(30) Priorité: 25.11.2011 FR 1160783
(43) Date de publication de la demande: 01.10.2014
(73) Titulaire: Renault S.A.S., 92100 Boulogne-Billancourt (FR)
(72) Inventeur: ANGELINI, Bruno, F-78125 Poigny la Foret (FR); CHARPENTIER, Frederic, F-91120 Palaiseau (FR)
(86) Numéro de dépôt international: PCT/EP2012/073155
(87) Numéro de publication internationale: WO 2013/076108

(56) Documents cités:
- DE-A1-102009 019 930
- JP-A- 2000 190 805
- US-A- 5 687 987

## Description

La présente invention concerne un dispositif de coussin gonflable de sécurité destiné à un siège de véhicule automobile et, plus particulièrement, un siège équipé d'un coussin gonflable de sécurité latéral.

Des systèmes de sécurité à coussin gonflable (« airbag ») sont généralement disposés dans l'habitacle d'un véhicule automobile pour protéger les passagers en cas de choc, en s'interposant entre ces derniers et tout élément potentiellement dangereux de la structure du véhicule automobile. Des coussins gonflables équipent de plus en plus souvent les sièges du véhicule et notamment les côtés de ces sièges pour protéger latéralement le passager. De tels coussins sont alors généralement fixés à l'armature du dossier et sont intégrés dans la garniture du siège. Le dossier d'un siège de véhicule automobile est généralement constitué d'une armature rigide recouverte d'une garniture. La garniture est constituée d'un matériau déformable, par exemple un matériau en mousse (matelassure) et d'une coiffe, par exemple en un matériau textile ou en peau. Lorsqu'il est équipé d'un système de sécurité à coussin gonflable, ce système s'insère dans un logement ou espace prévu à cet effet dans la matelassure et est fixé à l'armature. Une couture "fusible", c'est-à-dire adaptée à se déchirer ou à éclater facilement lors du déploiement du sac gonflable, est alors prévue dans la coiffe à proximité du système de sécurité pour permettre la sortie du sac. Un coussin gonflable de type tête-thorax est positionné de telle sorte qu'en cas de choc latéral, il vienne se déployer en s'interposant entre l'occupant et le panneau de porte.

Pour le gonflage du sac replié, le dispositif de coussin gonflable comprend un générateur de gaz qui peut se déclencher quand un choc a été détecté. Le générateur est généralement sous forme d'une cartouche cylindrique comportant des orifices d'échappement de gaz sur sa périphérie, et il est connu, par exemple par les documents DE 10 2009 019 930 A1, qui divulgue un dispositif de coussin gonflable selon le préambule de la revendication 1, US 6231069 ou WO02081267, de prévoir autour du générateur de gaz un déflecteur sous forme d'une enveloppe en métal ou en plastique destinée à diriger le gaz délivré dans des directions privilégiant le déploiement correct du sac plié.

Pour avoir la prestation souhaitée, il est donc important que le coussin gonflable se positionne correctement en face des zones de protection. Malheureusement dans certaines configurations, le coussin peut avoir tendance à mal se positionner, la chambre de la protection de tête se situant trop en avant de l'occupant.

Le but de l'invention est de remédier à ce défaut et de proposer une solution pour empêcher la rotation ou le basculement du coussin gonflable latéral sur la partie avant, et ainsi continuer à avoir la couverture de la zone de protection, notamment dans la zone de la tête.

L'invention atteint son but grâce à un dispositif de coussin gonflable pour siège automobile, comprenant un générateur de gaz sous forme de cartouche allongée associé à un sac gonflable, le générateur de gaz étant entouré au moins partiellement d'un déflecteur solidaire du générateur, l'ensemble du générateur et du déflecteur comportant des goujons de fixation à l'armature d'un siège, caractérisé en ce que le déflecteur est prolongé vers le haut par une bride rigide sur laquelle est passée une partie du sac replié, moyennant quoi la bride rigide préposition ne correctement le sac gonflable pendant son déploiement et empêche la rotation du coussin gonflable vers l'avant.

Selon d'autres caractéristiques de l'invention, prises seules ou en combinaison :
- La bride passe dans un fourreau formé dans le sac.
- une extrémité supérieure du sac est attachée à l'extrémité supérieure de la bride.
- la bride est rapportée au-dessus du déflecteur.
- la bride forme une partie intégrante du déflecteur.
- le générateur a une hauteur comprise entre environ la moitié et le tiers de celle du sac.
- le générateur est disposé verticalement dans un angle inférieur du sac.
- le générateur comporte une couronne d'orifices de diffusion de gaz en partie masqués par le déflecteur.

L'invention concerne aussi un siège de véhicule automobile comprenant un dossier muni d'une armature rigide, caractérisé en ce qu'il comporte un dispositif de coussin gonflable de sécurité tel que décrit ci-dessus fixé à l'armature du siège.

D'autres caractéristiques et avantages de l'invention ressortiront de la description suivante d'un exemple de réalisation. Il sera fait référence aux dessins annexés sur lesquels :
La figure 1 est une vue en perspective schématique de trois-quarts avant d'un siège automobile auquel l'invention est destinée, le siège étant habillé
La figure 2 est une vue en perspective schématique de trois-quarts arrière du même siège dépouillé de sa garniture et montrant le dispositif de sac gonflable en éclaté en attente de fixation sur l'armature du siège.
La figure 3 est une vue en perspective schématique de trois-quarts avant du même siège dépouillé de sa garniture et montrant le dispositif de sac gonflable en position.
La figure 4 montre un détail de dispositif de sac gonflable plié avec en transparence le générateur de gaz et son déflecteur, vu du côté des fixations.
La figure 5 montre le même détail de dispositif de sac gonflable plié avec en transparence le générateur et son déflecteur, vu du côté opposé aux fixations.
La figure 6 montre un détail du dispositif conforme à l'invention de sac gonflable plié avec en transparence le générateur, son déflecteur et la bride, vu du côté du générateur.
La figure 7 montre un détail du même dispositif conforme à l'invention de sac gonflable plié avec en transparence le générateur, son déflecteur et la bride, vu du côté opposé au générateur.

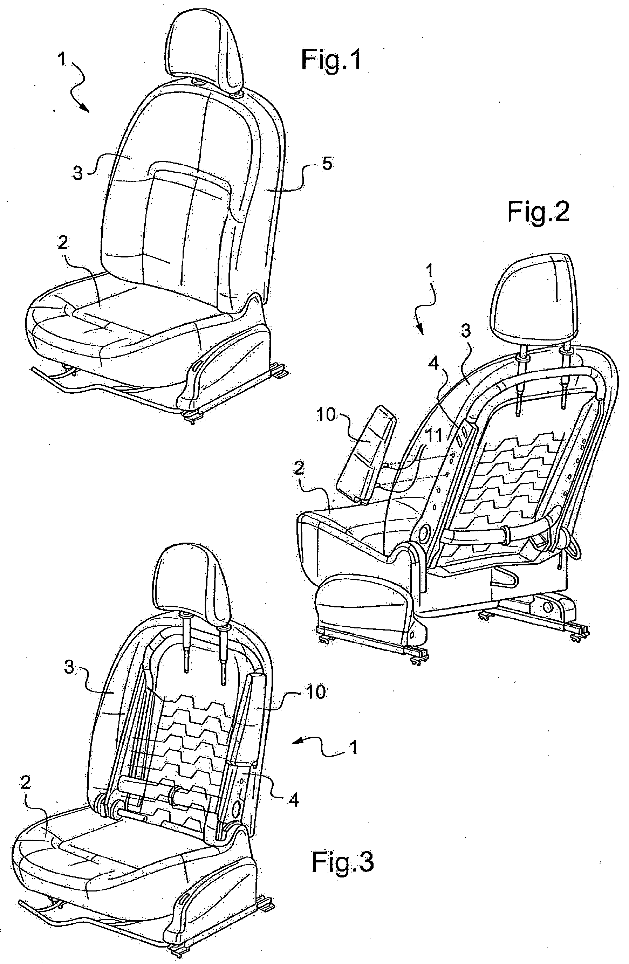

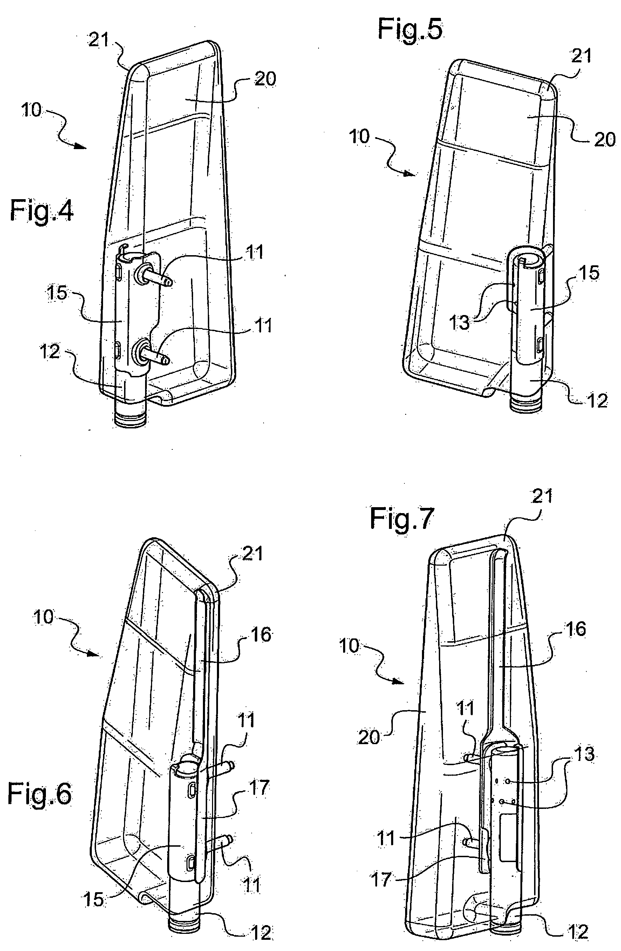

La figure 1 montre un siège automobile 1 comportant de manière classique une assise 2 et un dossier articulé 3. Le dossier comporte une armature métallique 4 visible sur les figures 2 et 3, recouverte d'une garniture matelassée, par exemple en mousse, elle-même couverte d'une coiffe de protection. Le dossier comprend deux côtés 5 qui forment des bourrelets matelassés légèrement en saillie vers l'avant du siège. Dans l'un ces côtés 5 est logé, dans un logement formé dans la matelassure, un dispositif de coussin gonflable 10 qui sera maintenant décrit en référence aux figures 4 à 7. Des goujons 11 qu'on aperçoit sur la figure 2 permettent de venir fixer latéralement le dispositif 10 sur l'armature 4 du dossier 3. Ces dispositions sont classiques.

Le dispositif 10 de l'invention (cf. figures 4 à 7) comprend d'une part le sac gonflable 20 replié et prêt à être gonflé par le générateur de gaz 12 qui se présente sous forme d'une cartouche cylindrique d'une hauteur comprise entre la moitié et le tiers de la hauteur du sac 20, le générateur se situant sensiblement verticalement dans un angle du sac replié, dans sa partie inférieure. Le sac replié est disposé dans une enveloppe souple, par exemple en non tissé, qui se déchire au moment de l'expansion et qui n'a pas été représenté. Le générateur 12 comprend sur sa périphérie des orifices 13, par exemple au niveau d'une couronne disposée en partie supérieure de la cartouche (cf. figures 5 et 7). Le générateur 12 peut être solidaire des goujons de fixation 11, par exemple deux goujons radiaux disposés horizontalement pour se fixer à l'armature 4 de siège. Les figures 4 et 5 montrent le déflecteur 15 disposé partiellement autour de la cartouche du générateur de gaz 12 : le déflecteur 12 obture certains des orifices 13 de passage de gaz de manière que l'échappement du gaz de gonflage se fasse dans des directions privilégiant un bon déploiement du sac replié 20. Ici, le déflecteur 15 laisse découverts les orifices 13 situés du côté allant vers l'avant et à l'opposé des goujons de fixation 11, de manière à pousser le sac à se déployer vers l'avant.

Les figures 6 et 7 montrent la bride 16 de l'invention qui vient prolonger verticalement vers le haut l'ensemble de générateur 12 et de déflecteur 15. Cette bride 16 passe avantageusement dans un fourreau non représenté formé dans l'arête verticale du sac 20 de manière à maintenir au mieux le sac 20 vers le haut, notamment quand il va se gonfler, et l'empêcher de pivoter vers l'avant du siège. Le bride 16 peut de préférence glisser librement dans le fourreau, de manière que l'extension verticale du sac 20 lorsqu'il se gonfle soit guidée mais non entravée. Selon un autre mode de réalisation, l'extrémité supérieure 21 du sac 20 peut être fixée à l'extrémité supérieure de la bride de prolongement 16.

La bride 16 est rendue solidaire du déflecteur 15 et du générateur de gaz 12 par exemple grâce à une base de fixation 17 qui est cylindrique et vient coiffer un secteur de l'ensemble de déflecteur 15/ générateur 12, au niveau des goujons 11 (la base 17 comporte deux perçages pour le passage des goujons 11).

Selon un autre mode de réalisation, la bride 16 n'est pas rapportée mais est directement intégrée au déflecteur 15 dont elle constitue un prolongement. Cette solution permet un gain de matière et donc un gain de poids. Par ailleurs, elle supprime une épaisseur et conduit à un volume dans le siège moins important

Quel que soit le mode de réalisation, le fonctionnement reste le même : lors du gonflement du sac 20 en cas de choc, le sac 20 reste guidé verticalement le long de son arête située le plus près de l'armature de siège, et se déploie donc correctement en restant près de cette armature de siège, sans plonger vers l'avant.

## Revendications

1. Dispositif de coussin gonflable (10) pour siège automobile comprenant un générateur de gaz (12) sous forme de cartouche allongée disposée dans un sac gonflable (20), le générateur de gaz (12) étant entouré au moins partiellement d'un déflecteur (15) solidaire du générateur (12), l'ensemble du générateur (12) et du déflecteur (15) comportant des goujons (11) de fixation à l'armature (4) d'un siège (1), **caractérisé en ce que** le déflecteur (15) est prolongé vers le haut par une bride rigide (16) sur laquelle est passée une partie du sac replié (20).

2. Dispositif selon la revendication 1 **caractérisé en ce que** la bride (16) passe dans un fourreau formé dans le sac (20).

3. Dispositif selon l'une quelconque des revendications 1 ou 2, **caractérisé en ce qu'**une extrémité supérieure (21) du sac (20) est attachée à l'extrémité supérieure de la bride (16).

4. Dispositif selon l'une quelconque des revendications 1 à 3, caractérisé en ce la bride (16) est rapportée au-dessus du déflecteur (15).

5. Dispositif selon l'une quelconque des revendications 1 à 3, caractérisé en ce la bride (16) forme une partie intégrante du déflecteur (15).

6. Dispositif selon l'une quelconque des revendications 1 à 5, caractérisé en ce le générateur (12) a une hauteur comprise entre environ la moitié et le tiers de celle du sac (20).

7. Dispositif selon l'une quelconque des revendications 1 à 6, caractérisé en ce le générateur (12) est disposé verticalement dans un angle inférieur du sac (20).

8. Dispositif selon l'une quelconque des revendications 1 à 7, caractérisé en ce le générateur (12) comporte une couronne d'orifices (13) de diffusion de gaz en partie masqués par le déflecteur (15).

9. Siège (1) de véhicule automobile comprenant un dossier (3) muni d'une armature rigide (4), **caractérisé en ce qu'**il comporte un dispositif selon l'une quelconque des revendications 1 à 8 fixé à l'armature (4) du siège.

## Patentansprüche

1. Airbagvorrichtung (10) für einen Kraftfahrzeugsitz, die einen Gasgenerator (12) in Form eines länglichen Einsatzes umfasst, der in einem Luftkissen (20) angeordnet ist, wobei der Gasgenerator (12) mindestens teilweise von einer mit dem Generator (12) fest verbundenen Leitvorrichtung (15) umgeben ist, wobei die Anordnung aus dem Generator (12) und der Leitvorrichtung (15) Stifte (11) zur Befestigung am Gestell (4) eines Sitzes (1) umfasst, **dadurch gekennzeichnet, dass** die Leitvorrichtung (15) nach oben durch einen starren Flansch (16) verlängert ist, über den ein Teil des gefalteten Kissens (20) geführt ist.

2. Vorrichtung nach Anspruch 1, **dadurch gekennzeichnet, dass** der Flansch (16) durch eine in dem Kissen (20) ausgebildete Buchse verläuft.

3. Vorrichtung nach einem der Ansprüche 1 oder 2, **dadurch gekennzeichnet, dass** ein oberes Ende (21) des Kissens (20) am oberen Ende des Flanschs (16) befestigt ist.

4. Vorrichtung nach einem der Ansprüche 1-3, **dadurch gekennzeichnet, dass** der Flansch (16) über der Leitvorrichtung (15) angebracht ist.

5. Vorrichtung nach einem der Ansprüche 1-3, **dadurch gekennzeichnet, dass** der Flansch (16) aus einem integralen Teil der Leitvorrichtung (15) ausgebildet ist.

6. Vorrichtung nach einem der Ansprüche 1-5, **dadurch gekennzeichnet, dass** der Generator (12) eine Höhe aufweist, die zwischen ungefähr der Hälfte und dem Drittel der Höhe des Kissens (20) liegt.

7. Vorrichtung nach einem der Ansprüche 1-6, **dadurch gekennzeichnet, dass** der Generator (12) vertikal in einer unteren Ecke des Kissens (20) angeordnet ist.

8. Vorrichtung nach einem der Ansprüche 1-7, **dadurch gekennzeichnet, dass** der Generator (12) einen Kranz von Gasverteilungsöffnungen (13) umfasst, die teilweise von der Leitvorrichtung (15) verdeckt sind.

9. Kraftfahrzeugsitz (1), der eine mit einem starren Gestell (4) versehene Lehne (3) umfasst, **dadurch gekennzeichnet, dass** er eine Vorrichtung nach einem der Ansprüche 1-8 umfasst, die am Gestell (4) des Sitzes befestigt ist.

## Claims

1. Airbag device (10) for a motor vehicle seat comprising a gas generator (12) in the form of an elongate cartridge arranged in an inflatable bag (20), the gas generator (12) being surrounded at least partially by a deflector (15) secured to the generator (12), the assembly of the generator (12) and of the deflector (15) comprising bolts (11) for fastening to the frame (4) of a seat (1), **characterized in that** the deflector (15) is extended upwardly by a rigid flange (16) over which a part of the folded bag (20) is passed.

2. Device according to Claim 1, **characterized in that** the flange (16) passes through a sleeve formed in the bag (20).

3. Device according to either one of Claims 1 and 2, **characterized in that** an upper end (21) of the bag (20) is attached to the upper end of the flange (16).

4. Device according to any one of Claims 1 to 3, **characterized in that** the flange (16) is added on above the deflector (15).

5. Device according to any one of Claims 1 to 3, **characterized in that** the flange (16) forms an integral part of the deflector (15).

6. Device according to any one of Claims 1 to 5, **characterized in that** the generator (12) has a height of between about a half and a third of that of the bag (20).

7. Device according to any one of Claims 1 to 6, **characterized in that** the generator (12) is arranged vertically in a lower angle of the bag (20).

8. Device according to any one of Claims 1 to 7, **characterized in that** the generator (12) comprises a ring of gas diffusion orifices (13) partly masked by the deflector (15).

9. Motor vehicle seat (1) comprising a backrest (3) provided with a rigid frame (4), **characterized in that** it comprises a device according to any one of Claims 1 to 8 fastened to the frame (4) of the seat.
